# EUROPEAN PATENT APPLICATION

(11) **EP 4 838 323 A1**
(43) Date of publication of application: **11.11.2026**
(21) Application number: 26176765.1
(22) Date of filing: 06.05.2026
(51) Int. Cl.: G05B 19/418, B60L 13/03, B65G 43/00, B65G 54/02, G05B 19/416

(54) **MOTION CONTROL FOR SHUTTLES ON A LINEAR MOTOR CONVEYOR**

(30) Priority: 06.05.2025 US 202563800666 P
(71) Applicant: ATS Corporation, Cambridge, ON N3H 4R7 (CA)
(72) Inventor: DOLGOVYKH, Anton, Cambridge, N3H 4R7 (CA); ABBASI, Uzair, Cambridge, N3H 4R7 (CA)
(74) Representative: Noble, Nicholas

(57) **Abstract**

In order to control the movement of shuttles on a track, trajectories for each shuttle, which may specify the acceleration and velocity of the respective shuttles can be determined. The trajectories can be determined by first determining a region of the track associated with a boundary that the shuttle will need to begin decelerating in order to stop at a target location. Once the deceleration region is determined, the trajectory through each region can be determined. If the current region is not the deceleration region, the trajectory is determined according to the maximum velocity and acceleration values for the current region while ensure that the next region's boundary conditions are adhered to. If the current region is the deceleration region, the trajectory is determined to the deceleration location and then decelerating at the maximum acceleration rate until stopped at the target location.

## Description

### RELATED APPLICATIONS

The current application claims priority to US Provisional Patent Application No. 63/800,666, filed May 6, 2025 and titled "Motion Control For Shuttles On A Linear Motor Conveyor," the entire contents of which are incorporated herein by reference for all purposes.

### TECHNICAL FIELD

The current disclosure relates to controlling shuttles on a linear motor conveyor, and in particular to determining trajectories of shuttles on the linear motor conveyor.

### BACKGROUND

Linear motor conveyors are used in a broad range of applications including in automated, or semi-automated manufacturing, assembly, and packaging applications. Linear motor conveyors comprise a track on which a plurality of shuttles are controllably moved. The shuttles can carry parts, components and/or tooling around the track in order to carry out one or more operations at one or more processing stations.

The control of the movement of the shuttles is typically provided by a controller that determines the trajectories of all of the shuttles on the track and controls the track electronics in order to move the shuttles according to the determined shuttle trajectories. The controller can take into account numerous factors when determining shuttle trajectories, including maximum velocities and accelerations of the shuttles along different regions of the track, locations of other shuttles to avoid collisions, safe following distances between shuttles, locations of external components, synchronization with other components or tooling, etc.

An additional, alternative and/or improved method of controlling movement of shuttles along the track is desirable.

### BRIEF DESCRIPTION OF THE DRAWINGS

Further features and advantages of the present disclosure will become apparent from the following detailed description, taken in combination with the appended drawings, in which:
FIG. 1 depicts a linear motor conveyor system;
FIG. 2 depicts a method of controlling the motion of a shuttle on a linear motor conveyor;
FIG. 3 depicts a method of determining a region of the track that the shuttle needs to start stopping at to stop at a target location;
FIG. 4 depicts a method of determining a stopping trajectory for a shuttle;
FIG. 5 depicts moving a shuttle to a target location through a single region;
FIG. 6 depicts moving a shuttle to a target location through two regions;
FIG. 7 depicts moving a shuttle to a target location through two regions;
FIG. 8 depicts moving a shuttle to a target location through two regions;
FIG. 9 depicts moving a shuttle to a target location through two regions;
FIG. 10 depicts controlling motion of two shuttles;
FIG. 11 depicts a method of controlling motion of two shuttles;
FIG. 12 depicts a method of adding an offset target boundary for a following shuttle;
FIG. 13 depicts a method of recalculating a shuttle's trajectory;
FIG. 14 depicts controlling a gap between shuttles;
FIG. 15 depicts controlling a gap between shuttles;
FIG. 16 depicts a method of controlling a gap between shuttles; and
FIGs. 17 and 18 depict further examples of controlling a gap between shuttles.

### DETAILED DESCRIPTION

In accordance with the present disclosure there is provided a method of controlling a linear motor conveyor system comprising at least one shuttle moving along a track, the method comprising: receiving a target location on the track to stop a shuttle, the track associated with two or more regions each associated with a respective maximum velocity and a maximum acceleration; determining shuttle trajectories for each region the shuttle moves through from a current location to the target location, by determining if a current region is a braking region in which the shuttle must begin decelerating in order to stop at the target location, and: when the current region is not the braking region, determining a region trajectory of the shuttle within the region based on the maximum acceleration and maximum velocity of the region, and the maximum velocity and maximum acceleration of the next region on the track; and when the current region is the braking region, determining a region trajectory of the shuttle to a deceleration location within the braking region and a maximum deceleration trajectory of the shuttle from the deceleration location to the target location; and controlling the shuttle to move along the track according to the determined shuttle trajectories.

In a further embodiment of the method, each region of the two or more regions are defined by respective boundaries each associated with: a location along the track of a start of the respective region; a maximum velocity of shuttles travelling in the respective region; and a maximum acceleration of shuttles travelling in the respective region.

In a further embodiment of the method, the region trajectory of the shuttle within the current region is determined to match the velocity and acceleration associated with the boundary of the next region while adhering to the velocity and acceleration associated with the boundary of the current region.

In a further embodiment of the method, the method further comprises determining if a second shuttle (the following shuttle) is following the shuttle (the lead shuttle), and when there is a following shuttle following the lead shuttle, adding an offset boundary for the following shuttle that is offset by a minimum safe following distance from the target location of the lead shuttle.

In a further embodiment of the method, the offset boundary is associated with a velocity and acceleration of zero.

In a further embodiment of the method, the method further comprises determining shuttle trajectories for the following shuttle.

In a further embodiment of the method, determining the shuttle trajectories for the following shuttle is based on the offset boundary to ensure the following shuttle does not collide with the lead shuttle.

In a further embodiment of the method, the method further comprises determining shuttle trajectories for the following shuttle by: determining a safe trajectory for the following shuttle; determining a position compensation trajectory for closing a gap between the following shuttle and the lead shuttle; and combining the safe trajectory with the position compensation trajectory.

In a further embodiment of the method, the boundaries are further associated with: a minimum safe following distance between shuttles travelling in the respective region

In a further embodiment of the method, the method further comprises determining if it is possible to close the gap and determining the position compensation trajectory when it is possible to close the gap.

In a further embodiment of the method, the method further comprises one or more of: adjusting one or more existing boundaries; adding one or more new boundaries; and removing one or more existing boundaries.

In a further embodiment of the method, the method further comprises: recalculating one or more shuttle trajectories when one or more boundaries are adjusted, added, or removed.

In a further embodiment of the method, the method further comprises: when one or more boundaries are adjusted, added, or removed, determining if it is necessary to recalculate one or more shuttle trajectories; and when it is determined to be necessary, recalculating the one or more shuttle trajectories.

In a further embodiment of the method, the method further comprises determining the braking region for the shuttle.

In a further embodiment of the method, the braking region is the region of the two or more regions that the shuttle must begin decelerating in order to stop at the target location while adhering to the respective maximum velocity and the respective maximum acceleration of each of the one or more regions the shuttle will move through.

In a further embodiment of the method, determining the braking region comprises virtually backtracking along the track from the target location according to the regions' maximum accelerations and maximum velocities until a maximum velocity is reached and setting the region the maximum velocity is reached in as the braking region.

In a further embodiment of the method, the method further comprises storing acceleration and velocity values determined at boundaries of regions passed through during the virtual backtracking that are not the braking region.

In a further embodiment of the method, the stored acceleration and velocity values are used when determining the region trajectory with regions.

In accordance with the present disclosure there is further provided a controller for controlling shuttles on a track of a linear motor conveyor, the controller comprising: a memory storing instructions; and a processor for executing the instructions stored in memory, which when executed configure the controller to perform a method according to any of the methods described above.

In accordance with the present disclosure there is further provided a computer readable medium storing instructions which when executed by a processor a controller configure the controller to perform a method according to any of the methods described above.

In accordance with the present disclosure there is further provided a method of controlling a gap between a lead shuttle and a following shuttle travelling on a conveyor track, the method comprising: determining a trajectory for the lead shuttle; determining a safe trajectory for the following shuttle that will not cause the following shuttle to collide with the lead shuttle; determining a position compensation trajectory for the following shuttle to adjust a gap between the following shuttle and the lead shuttle; combining the safe trajectory with the position compensation trajectory to provide a trajectory for the following shuttle; controlling the lead shuttle to move along the track according to the determined shuttle trajectory for the lead shuttle; and controlling the following shuttle to move along the track according to the determined shuttle trajectory for the following shuttle.

In a further embodiment of the method, the position compensation trajectory reduces the gap between the following shuttle and the lead shuttle.

In a further embodiment of the method, the velocity of the lead shuttle is below the maximum velocity of a portion of the track the following shuttle is in, wherein the position compensation trajectory causes the following shuttle to accelerate to a velocity greater than the velocity of the lead shuttle in order to reduce the gap before decelerating to the velocity of the lead shuttle.

In a further embodiment of the method, the position compensation trajectory extends a time the following shuttle travels at the maximum velocity after the lead shuttle begins decelerating in order to reduce the gap.

In a further embodiment of the method, the position compensation trajectory increases the gap between the following shuttle and the lead shuttle.

In a further embodiment of the method, the position compensation trajectory causes the following shuttle to decelerate before the lead shuttle in order to increase a gap between the following shuttle and the lead shuttle.

In a further embodiment of the method, the shuttle trajectories use a constant jerk value.

The movement of shuttles along a conveyor system track is determined by one or more controllers. Target positions along the track can be specified for individual shuttles and the controller determines how the shuttles should move to the target positions. The target positions may also specify a particular velocity and/or acceleration for the shuttle at the target position. The motion profile of shuttles can be described according to the shuttles velocity, acceleration, and jerk. The shuttle motion profiles may be calculated in a position control loop that repeatedly determines the shuttle trajectories. One previous approach was reactive in nature and determined the motions for shuttles and every controller cycle determined whether a collision will occur if the current motion is maintained or if a leading shuttle were to abruptly stop. Other previous approaches for controlling shuttle motions determined a motion profile for a shuttle that moved the shuttle to a desired location and then adjusted the shuttle trajectory to account for external factors such as possible collisions with other shuttles. The calculations for determining the possible collisions and avoiding them makes optimizing the shuttle trajectories, and so the performance of the conveyor track including possibly the overall throughput, difficult.

Tracks of linear motor conveyors may have different regions that have different limits on parameters such as shuttle velocity, acceleration, jerk, following distances, etc. The current approach for controlling the shuttle motion described further below allows the shuttle trajectories to be determined based on each region. A region may be a portion of the track where a shuttle has defined motion characteristics such as a maximum velocity, acceleration, and/or jerk. Regions may define motion characteristics for all shuttles travelling in the region or may define motion characteristics for individual shuttles or groups of shuttles. For example a first group of shuttles which may share some common characteristic may be associated with a first set of motion characteristics for the region, while a second group of shuttles sharing different characteristics may be associated with a second set of motion characteristics for the same region. The regions may also be based on user-defined motion limited areas. Further, regions may be defined dynamically, for example based on track events, such as a stopped shuttle or disabled section as well as other events such as shuttles commanded at lower velocities/accelerations than physically allowed on a portion of the track.

When a target location is provided for a shuttle, a braking region may be determined. While it is possible to specify a target location with along with a non-zero velocity and or acceleration, the following assumes that the target location is associated with a velocity and acceleration of 0 such that the shuttle stops at the target location. The braking region is a region of the track that the shuttle braking start location is in, with the braking start location being the location on the track the shuttle needs to start braking/stopping in order to stop at the target location, assuming the shuttle is travelling at the maximum velocity for that region and decelerates at a maximum deceleration of the shuttle according to the parameters of regions. The braking start location and the target location may be in the same region, or may be in different regions, with the shuttle requiring to travel through one or more regions to stop at the target location. Once the braking region is determined, the shuttle can be driven as fast as possible, or desired through each region that is not the braking region.

The shuttle trajectory for a region may be determined as the shuttle passes into the region. If the region the shuttle is passing into is the determined braking region, the stopping trajectory for the shuttle can be finalized. The motion control process can determine the shuttle trajectories that adhere to the motion parameters of each region. Further, the motion control process described further below enables the motion trajectories to be easily adjusted in order to ensure that shuttles do not collide, or get too close to other shuttles. Broadly, the control process determines the region the shuttle needs to start decelerating in order to stop at the target location and then determines the fastest movement, while adhering to other requirements such as maximum velocities and or accelerations, through regions until the braking region is reached. The entire shuttle trajectory is not calculated initially, with the trajectories being calculated as shuttles pass through regions. Events may occur that need to be accounted for in the shuttle's trajectories, such as a manual stop, slow down, adjusted target location, a stopped or slowed shuttle in front etc. By calculating a shuttle's trajectory through each region when it begins to pass through the region, unnecessary calculations may be avoided.

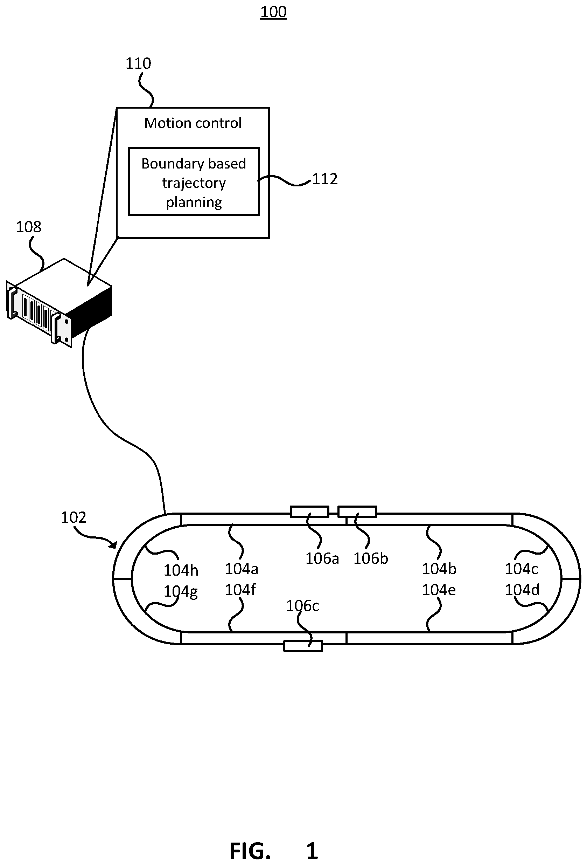

FIG. 1 depicts a linear motor conveyor system. The system 100 includes a linear motor conveyor 102 comprising a plurality of connected track sections 104a..104h (referred to collectively as track sections 104). FIG. 1 depicts the track sections as being arranged in a loop; however, the track sections can be arranged in a wide variety of configurations, including closed loop configurations and open-ended configurations. A number of shuttles 106a, 106b (referred to collectively as shuttles 106) can controllably move along the track sections. Each track section includes a number of electromagnetic coils that can be controlled to generate a magnetic field, which interacts with a magnet or magnetic array on the shuttles in order to provide motive force to move the shuttles. By controlling the current supplied to the different coils, movement of the shuttles along the conveyor track can be controlled independently.

A conveyor controller 108 is provided that determines how the shuttles should move on the track and controls the track electronics in order to provide the determined movement to the shuttles 106. The conveyor controller 108 can be provided as a general purpose computing device that is configured by the execution of particular instructions to provide motion control functionality 110. The controller 108 may directly control the coils in each track section, or the coils may be controlled by one or more additional controllers. For example, the controller 108 may determine the trajectories of the shuttles, then determine the coil current setpoints necessary to provide the trajectories and then control the coils, or coil drive electronics to provide the determined current to the coils. Alternatively, the controller 108 may communicate the trajectories to one or more intermediary controllers, such as a controller arranged in each track section, which in turn determine and apply the coil currents to provide the received trajectories. While the conveyor controller is depicted as a general purpose computing device, it is possible to be implemented in other devices such as a field programmable gate array (FPGA) controller, an application specific integrated circuit (ASIC) controller, or other purpose built computing devices.

The motion control functionality 110 may include boundary-based trajectory planning functionality 112 that determines shuttle trajectories based on boundaries between regions of the track. Various adjacent regions may be specified along the track that have different limitations on the shuttle trajectories. As a shuttle passes the boundary of an adjacent region, the shuttle should adhere to the new limitations. Accordingly, the trajectory planning can determine the trajectories based on the region limitations. The region limitations may be defined at, or between, boundaries, and/or may be defined for the regions. It is noted that the boundaries and regions are associated with each other. A region is a portion of track between two boundaries, and as such boundaries may be used to define regions, and/or regions may be used to define boundaries. The boundaries between regions, and/or the regions, may be associated region limitations which may be defined by kinematic parameters that define the maximum values for regions. The kinematic parameters may include the maximum velocity, maximum acceleration, and/or the maximum jerk. Further, the kinematic parameters for a region may include multiple sets of kinematic parameters for different operation conditions or for different groups or classes of shuttles. The region limitations may define additional parameters such as safe following distances between shuttles.

Broadly, the motion of the shuttle may be specified in terms of one or more of the shuttle's position, velocity, acceleration and jerk at various instances, lengths of time, and/or position on the track. The track may impose certain limits on the velocity and acceleration of shuttles. The limits may be specified for the entire track or for individual regions of the track. Further, the limits may be specified in a hierarchical manner such that if a portion of track does not have specific region limits set the limits of the higher level of the entire track may apply. When a shuttle passes the boundary between regions, it should adhere to the new limitations, if they differ. For example, the oval loop configuration may define four different regions of the track, namely two along the straight sections 114a, 114b and two along the curved sections 116a, 116b. The two regions 114a, 114b associated with the straight sections may have a first maximum velocity and acceleration, while the two regions 116a, 116b associated with the curved sections may have a second maximum velocity and acceleration that is lower than the corresponding limits of the straight sections. Accordingly, and assuming no other requirements or limitations, a shuttle will slow down as it approaches the curved regions 116a, 116b and accelerate at the start of the straight regions 114a, 114b. While the limitations may be defined for the different regions, it is possible for the limitations to be individually specified for each shuttle. For example, while a region may have a maximum velocity specified, an individual shuttle may have a maximum velocity, or other parameter for that region that is less than the regions values. The limitations may also be dynamically specified based on possibly changing operating conditions such as a mode of operation, safety characteristics, etc.

The physical arrangement of the track, such as straight or curved sections, may determine at least in part the velocity and acceleration limits of the associated regions. Other factors may contribute to a region's limits including for example a customer's desired running speed, desired power consumption, a shuttle's expected weight within the region, whether the track is exposed to possible physical interactions with individuals, etc. In addition to the motion limits, namely the maximum velocity and acceleration, the regions may also specify other shuttle limitations that should be accounted for when determining the shuttle's position such as a safe following distance between shuttles. For example, one region of the track may be associated with shuttles that are carrying a component that extends beyond the envelope of the shuttle and as such an additional gap between following shuttles should be provided in order to avoid collisions.

While the regions are described as being associated with limitations on various factors such as the velocity, acceleration, shuttle gap, etc. it is possible for the limitations to be associated with the shuttles as they pass through regions. Associating limitations with the shuttles instead of the regions can allow the shuttle trajectories to account for differences in individual shuttles. For example, a shuttle associated with a heavy payload may have a reduced velocity and/or acceleration for curved sections compared to a shuttle with no payload. Although the process is described further below with regard to limitations of a region, the same process can use individual shuttle limitations with the shuttles' limitations, which may in turn be determined by limitations of regions as the shuttle passes through the regions. This may effectively create a region/boundary for that shuttle and any following shuttles. For following shuttles the limitations of the region/boundary of the lead shuttle may be able to be exceed, which may allow a following shuttle to close a gap to the lead shuttle as described further below.

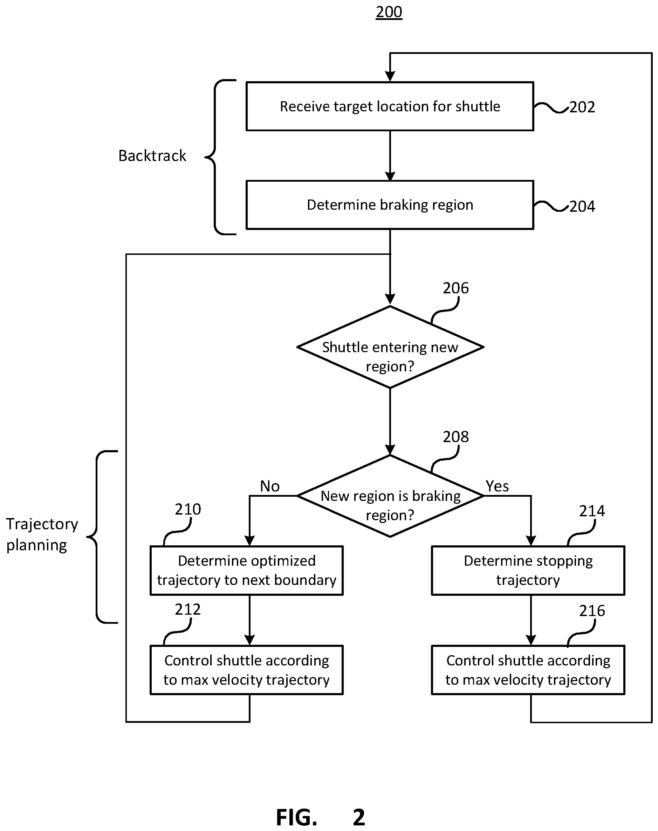

FIG. 2 depicts a method of controlling the motion of a shuttle on a linear motor conveyor. The method 200 may be provided by the boundary-based trajectory planning functionality 110 described above. The trajectory planning functionality comprises two sections. First is a backtracking process that determines the latest point, or region, at which the shuttle can start decelerating in order to stop at the target location. Once the region that the shuttle needs to start braking, referred to as the braking region, is determined the shuttle trajectory is determined for each region it passes through until reaching the destination. The process eliminates the need to fully calculate trajectories and instead determines the fastest shuttle trajectory for a region upon the shuttle reaching the region until the shuttle reaches the braking region, and then determines the stopping trajectory.

As depicted in FIG. 2, a target location for a shuttle is received (202). The target location is the desired location for a shuttle to stop at on a track. This may be for example a location where one or more processes or steps may be performed, although the location may simply be a location for the shuttle to stop at or may be dynamically generated for example as a result of a leading shuttle stopping. Further while described as stopping at the target location, it is possible for the target location to be associated with a non-zero velocity and/or acceleration. Once the target location is received it is used to determine the braking region for the shuttle (204). The braking region can be determined by backtracking from the target location according to region limits on acceleration and velocity until a region's maximum velocity is reached. The location at which a region's maximum velocity is reached by backtracking from the target location may be considered as the braking start location. The region the determined braking start location is in may be identified as the braking region.

Once the braking region is determined, the trajectory planning can determine one or more shuttle trajectories in order to move the shuttle to the target location. The trajectory planning moves the shuttle from the initial, or current location, through the regions of the track. It will be appreciated that while it is described as moving the shuttle, during the trajectory planning the shuttle is not physically moved on the track, but rather virtually moved in the planning calculations. The planned trajectory can be executed in order to actually move the shuttle on the track according to the planned trajectories.

The shuttle may have an initial, or current, position, velocity, acceleration, and jerk It is noted that the trajectory planning uses constant jerk values, that is the derivative of the jerk value is zero. Using a constant jerk value simplifies calculations and can also ensures that with two accelerating shuttles the following shuttle will not accelerate into the lead shuttle. The method determines if the shuttle is entering a new region (206). If the shuttle is not entering a new region (No at 206), can return to continually check if it is entering a new region. If the shuttle is entering a new region (Yes at 206), it is determined if the new region is the determined braking region (208). If the new region is not in the braking region (No at 208), the method determines the region trajectory for the shuttle to the next boundary or region (210). The region trajectory can be optimized for a variety of factors. For example, it is possible to optimize the region trajectory to provide a trajectory that accelerates/decelerates at the maximum rate to the maximum velocity of the region and then, if necessary, decelerates at the maximum rate in order to match the shuttle's velocity and acceleration values to the next boundary conditions. Such an optimized region trajectory provides the shuttle trajectory that results in the shuttle crossing a region in as little time as possible, while respecting kinematic motion limits and ending at the next region boundary with the kinematic motion limits of the next region.

It is possible that moving through a region as fast as possible may not result in higher throughput of the system. For example, if moving between two slow regions, accelerating to a higher speed may not increase overall throughput. Similarly, if a safe following distance increases in the next region, accelerating to close a gap to a leading shuttle may be unnecessary. Accordingly, the region trajectory may account for other factors. In cases where it may not be necessary or desirable to move through a region at maximum velocity, the region trajectory can be optimized on other criteria such as power consumption.

Regardless of the factors used in optimizing the region trajectory, once the region trajectory is determined to the next boundary for the region, the shuttle can be controlled according to the region trajectory (212).

As the shuttle moves through different regions, it is possible for the kinematic limits to change. Generally, when the next region's kinematic limits are larger than the current region, the shuttle's trajectory can accelerate up to the new limits upon entering the region. However, when the next regions kinematic limits are lower than the current region, it may be necessary to reduce the velocity and/or acceleration of the shuttle prior to entering the region. For example, a next region may have a lower acceleration limit compared to the current region. Assuming that the shuttle is not at the maximum velocity for either region, the acceleration may continue as the shuttle enters the new region; however, the acceleration should be reduced in order to meet the reduced acceleration limit of the next zone. Previous trajectory planning would typically reduce the acceleration to zero and then accelerate to the new acceleration limit. The current trajectory planning can reduce the acceleration to match the next regions maximum acceleration. This optimizes how fast the shuttle is able to accelerate to maximum velocities while maintaining max accel constraints.

As the shuttle moves according to the region trajectory, at some point in time it will enter a new region (Yes at 206) which is the braking region (Yes at 208). When the shuttle enters the braking region, the stopping trajectory is determined (212). The stopping trajectory comprises an region trajectory to a braking start location at which point the maximum deceleration is provided in order to stop the shuttle at the target location. The stopping trajectory may span multiple regions, in which case the full stopping trajectory may comprises multiple different piecewise deceleration trajectories.

Broadly, the process described above determines the region, and possibly the location, that the shuttle needs to begin to stop at. Then, if the shuttle is not in the braking region, it drives the shuttle as fast as possible until it reaches the braking region, at which point it determines the stopping trajectory. Since the trajectory planning process can determine the trajectories for regions between boundaries, which may be associated with different limits on the motion, it can easily account for the different region limits when planning the trajectories. Further, since the process determines the shuttle trajectories based on region boundaries, the boundaries can be easily shifted, new boundaries created or removed and the boundary conditions or limits changed and the trajectory planning automatically accounts for the new conditions. Further, since the overall trajectory of the shuttle is determined piece-wise for individual regions as the shuttle moves through the regions, the calculations can be less computationally expensive at the start since the entire trajectory from the current location to the target location does not need to be calculated. This may also reduce unnecessary calculations if conditions change that may require the trajectory to be recomputed.

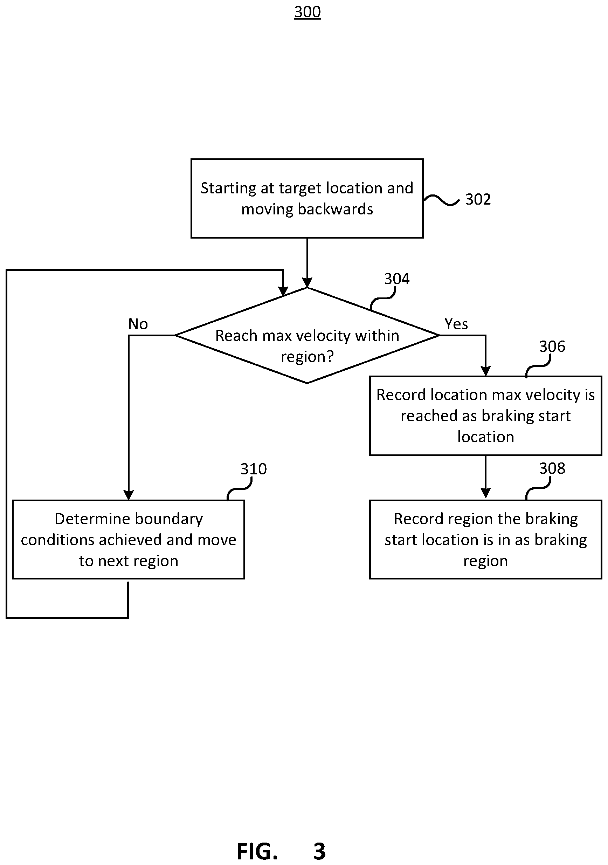

FIG. 3 depicts a method of determining a region of the track that the shuttle needs to start stopping at to stop at a target location. The method 300 depicts how the backtracking process determines the braking start location and braking region. The method 300 starts at the target location for the shuttle and from stopped position moves backwards (302) by accelerating at the region's maximum acceleration. It is determined whether it is possible to reach the region's boundary conditions, namely the region's maximum velocity, before reaching the boundary (304). It is noted that the boundary condition for a particular region or shuttle may differ from the region's limitations, although in most scenarios the boundary conditions match the regions limits. Determining the maximum velocity may use the shuttle's position, velocity and acceleration values when entering the region. For the initial determination, the position will be the target location and the velocity and acceleration will be zero, otherwise, the location will be the boundary location and the velocity and acceleration will be the values reached of the shuttle at the boundary.

If it is possible to reach the maximum velocity (Yes at 304) before the region boundary starting from the shuttle's current location, velocity and acceleration, and accelerating at the maximum rate, then the reverse is also true. That is, a shuttle entering the region will be able to stop at the target location by decelerating at the maximum rate starting at some point within the region so long as the shuttle reaches the region boundary at or below the maximum velocity and acceleration, which should always be the case. When determining if the region's max velocity is reached within the region during the back track calculation, the location at which it reaches the maximum velocity is also the point the shuttle will need to start decelerating, assuming the shuttle is travelling at the maximum velocity. The location that the max velocity is reached may be recorded as the braking start location (306) and the region the braking start location is in may be recorded as the braking region (308). This information, and possibly other information such as the acceleration and velocity values at the braking start location may be stored and used in determining the shuttle trajectory, or it may be recalculated when determining the shuttle trajectory.

If the maximum velocity of a region is not reached within the region (No at 304) the method determines the current boundary conditions, namely the shuttle velocity and shuttle acceleration reached at the boundary (310) and then the processing moves to the next region (304). If the shuttle does not reach the maximum velocity, then the shuttle will need to start braking before entering the current region in order to stop at the target location and as such the backtracking continues to the next region in order to determine if it is the braking region. It is determined if the region's max velocity will be reached within the next region, when starting at the current boundary conditions. The boundary conditions may be stored for use in subsequent calculations or may be recalculated as needed.

As described above, the region that the shuttle will need to start decelerating at, assuming it is travelling at a region's maximum velocity, is determined. The information determined in the backtracking process can be saved for subsequent use by the trajectory planning functionality. For example, the velocity and speed that a shuttle needs to enter a region at in order to stop at the target location can be stored and used as the boundary conditions when determining the region trajectory for a shuttle travelling between region boundaries. When determining the region trajectory for a shuttle travelling between boundaries of regions, the shuttle will be arriving to the boundary at or below the region's maximum velocity and maximum acceleration. Accordingly, unless the region is a braking region and without other considerations or requirements, the shuttle will either maintain the current velocity or accelerate at the maximum acceleration rate to the region's maximum velocity. Similarly, when planning a trajectory, the shuttle will need to enter a region either at or below the boundary conditions, namely the velocity and acceleration. If the shuttle is above the boundary conditions, it decelerates to match the boundary conditions prior to entering the region.

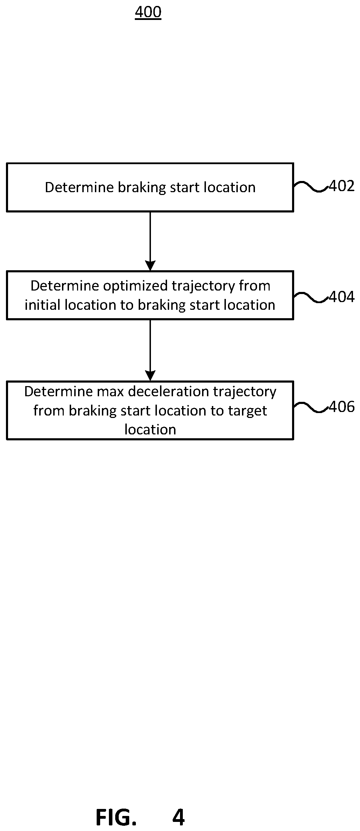

FIG. 4 depicts a method of determining a stopping trajectory for a shuttle. The method 400 depicts how to determine the maximum deceleration trajectory for the shuttle when it enters a braking region. The method 400 determines the braking start location (402). The braking start location is the point at which the shuttle needs to start decelerating in order to stop at the target location. The braking start location may be determined by retrieving or accessing a previously calculated value for the location. For example, during the backtracking process for determining the braking region, the braking start location may be determined and stored. Additionally, or alternatively, the braking start location can be directly calculated. Once the braking start location is determined, the region trajectory is determined (404) from the shuttle's location, speed and acceleration entering the region, to the braking start location. It is noted that the braking start location may be determined based on the shuttle travelling at the region's maximum velocity. If it is not possible for the shuttle to reach the region's maximum velocity at the braking start location, the braking start location can be recalculated, or the maximum velocity of the region for the shuttle can be derated to the velocity that the shuttle will be travelling at when it reaches the braking start location, or to the maximum velocity the shuttle will reach before needing to decelerate in order to stop at the target location. As described in further detail below, a position compensation trajectory may be added to this determined trajectory that moves the shuttle to the next region boundary as fast as possible, while still reaching the kinematic motion limits of the next region boundary. Additionally or alternatively, the region trajectory may be calculated and then a compensation applied to the trajectory in order to adjust the acceleration so it reaches the required maximum velocity.

Once the region trajectory is determined to the braking start location, the maximum deceleration trajectory is determined (406) which is a trajectory that applies the maximum deceleration to the shuttle until it stops at the target location.

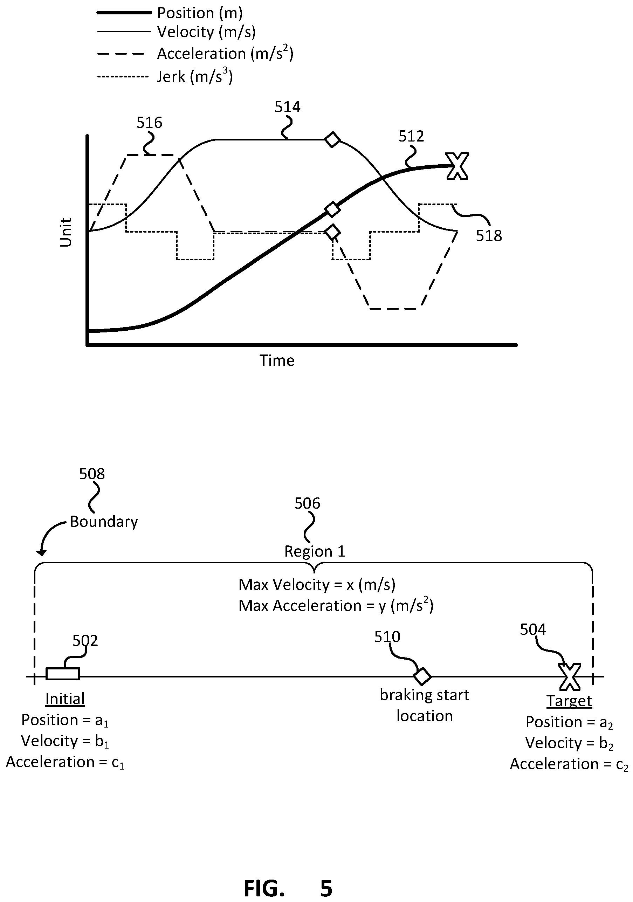

FIG. 5 depicts moving a shuttle to a target location through a single region. As depicted, the shuttle is desired to move from an initial position 502 to a target location 504. In FIG. 5 both the initial position and target location are within the same region 506 such that the shuttle 502 has already crossed the boundary 508 of the region. Assuming that the shuttle is travelling at the region's maximum velocity it will need to start deceleration at a braking start location 510 in order to stop at the target location. The region defines some maximum velocity and maximum acceleration that the shuttle can travel at within the region. The region's maximum velocity and acceleration may be associated with the region's boundary. As described further below, additional boundaries with respective conditions can be specified. By using the region boundaries when determining the shuttle trajectories, it is easy to include the additional boundaries in the trajectory planning.

FIG. 5 depicts a graph of the shuttle's position 512, velocity 514, acceleration 516 and jerk 518 relative to some time interval. It is noted that the graph depicted in FIG. 5 is only illustrative and as such actual values for the positions, velocities, accelerations and jerks are not discussed. As depicted in FIG. 5 the shuttle is initially stopped at some location a1 so the velocity and acceleration are zero (i.e. b1= c1=0). It is noted that the shuttle does not need to be initially stationary. For example, it could enter the region at the boundary location at the maximum velocity of the region and zero acceleration if it was travelling at the maximum velocity of the previous region which was equal to or greater than the current region, or it may enter the region at some velocity and acceleration below the maximum velocity and acceleration for the region.

Since the shuttle 502 is not travelling at the maximum velocity of the region, it accelerates at the maximum acceleration rate until it reaches the maximum velocity. It is noted that the acceleration graph depicts the acceleration increasing until it reaches the maximum value, where it holds steady for a period of time before decelerating back down to zero since it is not possible to instantaneously change the acceleration values. Once the shuttle reaches the braking start location 510 travelling at the maximum velocity, it begins decelerating at the maximum deceleration rate until stopped. As depicted in the graph of FIG. 5, the jerk remains constant as the acceleration changes.

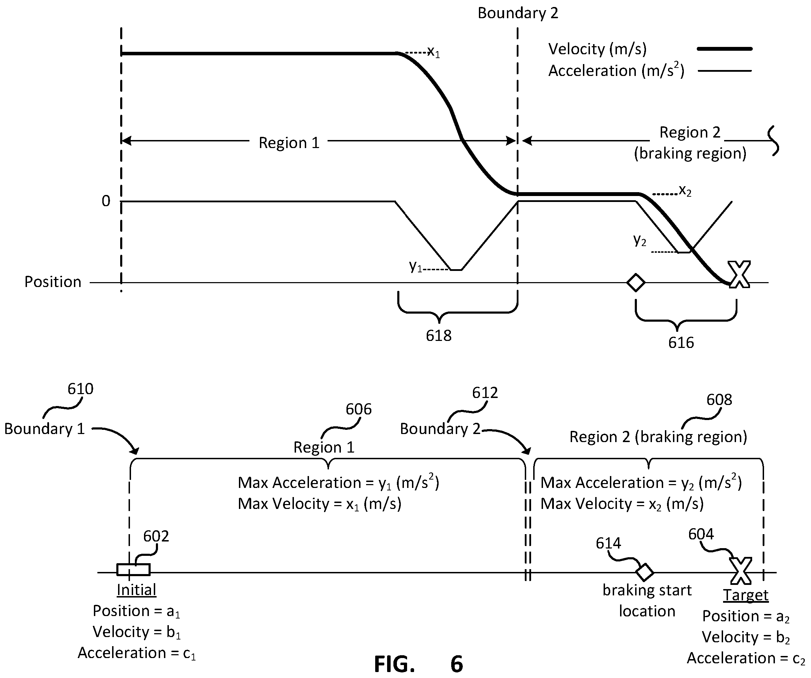

FIG. 6 depicts moving a shuttle to a target location through two regions. It is noted that the graph depicted in FIG. 6 only shows the velocity and acceleration vs. the position for clarity. As depicted, a shuttle 602 is to move to a target location 604. The shuttle and the target location are in different regions 606, 608. The boundaries of each region 610, 612 may be associated with the region's limits, namely the maximum acceleration and velocity for shuttles in the region. Additionally or alternatively, the limits may be associated with the regions. As depicted in the graph of FIG. 6, the maximum velocity and acceleration for region 1 (x1, y1) is greater than the velocity and acceleration of region 2 (x2, y2).

The braking start location 614 is within the same region as the target location. The braking start location can be determined by backtracking from the target location until a region's maximum velocity is reached. As depicted, by accelerating backwards from the target location at the region's maximum acceleration 616 it is possible to reach the regions maximum velocity within the region. Accordingly, as long as the shuttle enters region 2 at or below the maximum velocity it will be possible to stop at the target location. As described above, when determining the shuttle's trajectory, the braking start location and braking region may be determined for example using a backtracking process. Once the braking region is determined, it is possible to determine the shuttle's trajectory from the initial location to the target location. It is noted that the shuttle crosses the boundary to region 1 already travelling at the region's maximum velocity. As the shuttle enters region 1, it is determined if region 1 is the braking region and since the current region isn't the braking region, the region trajectory is determined that adheres to the region's limits. Since the boundary for region 2 has a lower maximum velocity, the shuttle will need to decelerate to the lower velocity before crossing the region's boundary. As depicted, the shuttle will decelerate at the maximum acceleration rate 618 in order to reach the lower velocity.

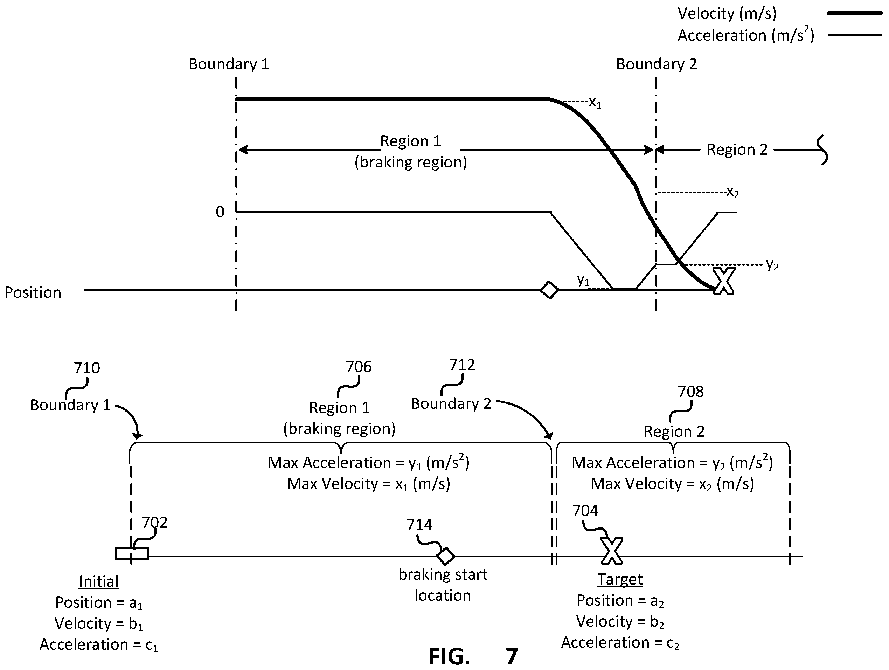

FIG. 7 depicts moving a shuttle to a target location through two regions. As depicted, a shuttle 702 is to move to a target location 704. The shuttle and the target location are in different regions, namely region 1 706, and region 2 708. The boundaries of each region 710, 712 may be associated with the region's limits, namely the maximum acceleration and velocity for shuttles in the region. As depicted in the graph of FIG. 7, the maximum velocity and acceleration for region 1 is greater than the velocity and acceleration of region 2.

The braking start location 714 is determined by a backtracking process and is outside of the target location's region and so the braking region is determined to be region 1 706. As can be seen in FIG. 7, when backtracking from the target location it is possible to reach the maximum acceleration of region 2 (y2) however, it does not reach the maximum velocity (x2) of region 2. Accordingly, it is necessary to start decelerating before reaching the region. The backtracking can continue to the next region and determine if it is possible to reach the region's maximum velocity within the region. The backtracking process would determine that it is possible to reach the max velocity of region 1 and as such identifies region 1 as the braking region. When the shuttle enters region 1, it is determined that the shuttle has entered the braking region and so the region's shuttle trajectory it is determined as the max deceleration trajectory. The max deceleration trajectory comprises the maximum velocity portion until the shuttle reaches the braking start location at which point the shuttle will decelerate at the maximum acceleration rate. Since the acceleration rate is lower at the next boundary, the acceleration rate slows to the lower acceleration rate so that the shuttle does not exceed the region's limitations before crossing the boundary. When the backtracking process is performed, the shuttle's velocity and acceleration as it crosses boundary 2 712 can be stored in order to use as target boundary conditions for the region 1. That is, the acceleration and velocity at boundary 2 can be determined during the backtracking process and then used as the boundary conditions for boundary 2 when determining the shuttle's trajectory. As the shuttle enters region 2, it will be travelling at a velocity and acceleration which allow the shuttle to stop at the target location by decelerating at the maximum acceleration for region 2.

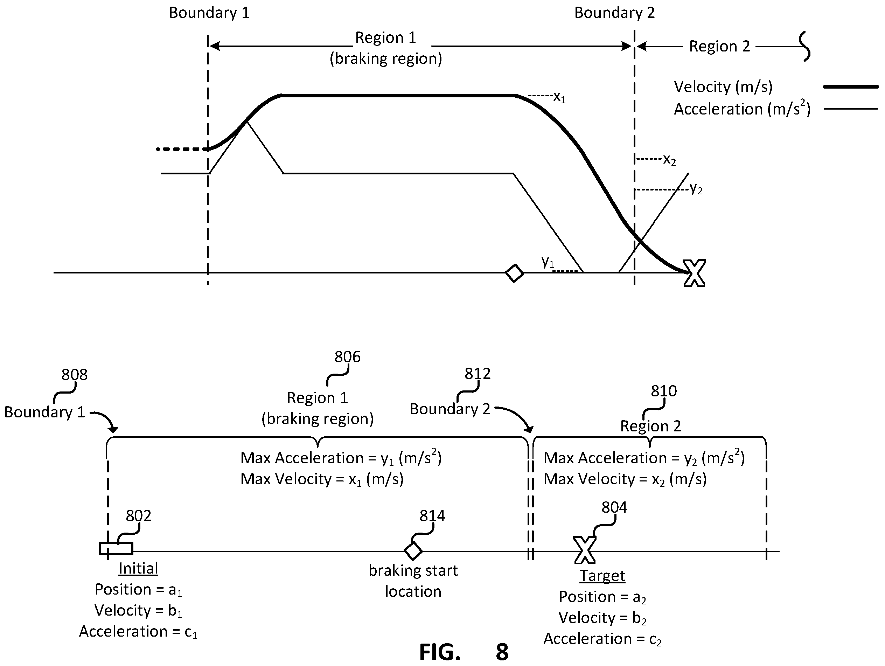

FIG. 8 depicts moving a shuttle to a target location through two regions. As depicted, a shuttle 802 is to move to a target location 804. The shuttle and the target location are in different regions, namely region 1 806, and region 2 808. The boundaries of each region 810, 812 may be associated with the region's limits, namely the maximum acceleration and velocity for shuttles in the region. As depicted in the graph of FIG. 8, the maximum velocity and acceleration for region 1 is greater than the velocity and acceleration of region 2.

The braking start location 814 is determined by backtracking from the target location 804. When backtracking from the target location, it will not be possible to reach either the maximum acceleration (y2) or maximum velocity (x2) of region 2 with the target location. The backtracking continues into the next region and will reach the region's maximum velocity (x1). Once the braking start location 814 and region is determined, the shuttle trajectory to move the shuttle from the initial position to the target location is determined. As can be seen in FIG. 8, the shuttle enters the first region at a velocity below the region's maximum velocity and as such accelerates to the maximum velocity x1. The trajectory continues at the maximum velocity until reaching the braking start location 814 at which point the shuttle decelerates at the maximum acceleration rate until the shuttle stops at the target location 804.

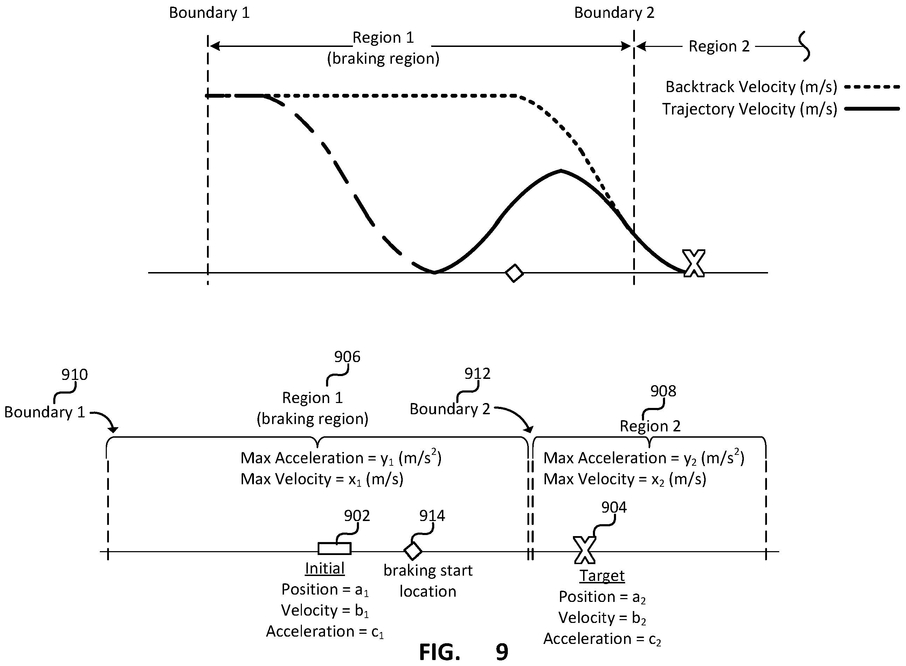

FIG. 9 depicts moving a shuttle to a target location through two regions. The example depicted in FIG. 9 is similar to that depicted in FIG. 8; however, the shuttle is initially stopped at some location 902 and is commanded to a target location 904. The shuttle may be initially in a first region 906 with the target location in a second region 908 with respective boundaries 910, 912. As depicted in FIG. 9 by the large broken line, the shuttle may have entered the region at some velocity but then is stopped. The shuttle may have been commanded to stop, or there may be some other reason for the shuttle stopping such as avoiding a collision, an emergency stop, etc. As depicted, the backtracking process determines the braking start location 914 and the braking region as region 1. As the shuttle begins to move again, the stopping trajectory is determined; however the shuttle will not have sufficient space in region 1. The stopping trajectory will accelerate to a lower velocity and then begin decelerating at the maximum acceleration rate of region 1, and then subsequently region 2. Although the braking start location 914 was determined by the backtracking process, the shuttle does not actually begin stopping at the braking start location as it will not have yet reached the maximum velocity of the region. The velocity that the shuttle will reach before beginning the deceleration can be determined and used as a derated region velocity. For example, the velocity used to generate the acceleration trajectory for the shuttle may be the calculated back-track velocity reached at the region boundary. This may be applied to the shuttle trajectory as a derated region velocity. A position compensation may then also be applied to cross any extra distance making the trajectory curve reach above the derated boundary velocity. If an acceleration is required at the boundary, for example due to different max accel values in region 1 and 2, it can be achieved by constructing an acceleration abort curve from the boundary and applying a new boundary with a new derated velocity.

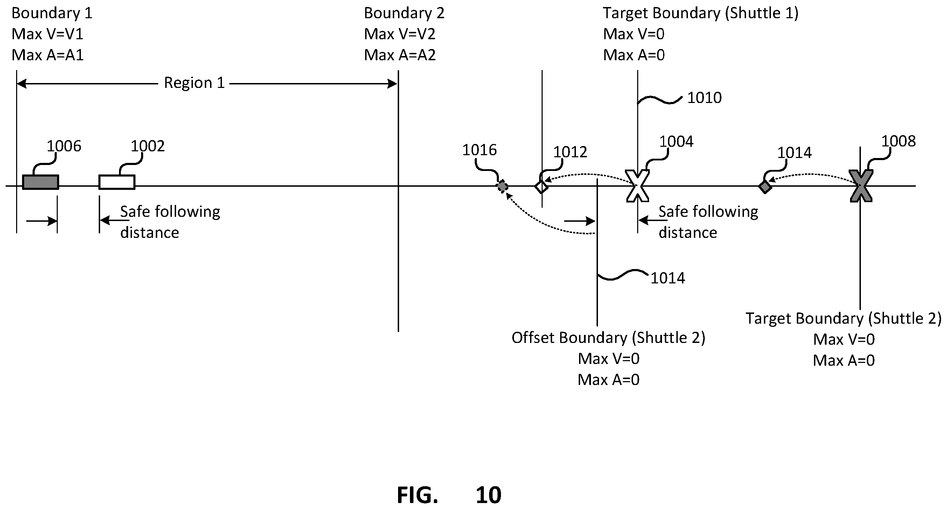

FIG. 10 depicts controlling motion of two shuttles. The above has described controlling the motion of a single shuttle. In most applications, there will be a plurality of shuttles moving on the track. As depicted in FIG. 10, a first shuttle 1002 is commanded to stop at a target location 1004. A second shuttle 1006 following the first shuttle is commanded to stop at a second target location 1008 which is past the first target location. If the trajectories of both shuttles are determined independently without concern of the other shuttle, it is possible that the second shuttle 1006 would crash into the first shuttle 1002 while it is stopped at the target location 1004. The process for determining the trajectory for multiple shuttles with one shuttle leading and the other shuttles following is based on the trajectory determination described above for a single shuttle. The determination of which shuttle is a lead shuttle and which are following shuttles can be made based on various factors including, for example a distance between shuttles. Further, while the following describes a shuttle as being either a leader or a follower, it is possible for a shuttle to act as both a leader and a follower.

The shuttle trajectories for leading shuttles can be determined in substantially the same manner as described above. The target location 1004 may be used to set a target boundary 1010 with acceleration and velocity values of 0. The target location is used to determine a braking start location 1012 and the braking start location and associated braking region used to determine the trajectory of the lead shuttle.

When determining the trajectory of the following shuttle 1006 rather than determining a braking start location 1014 from the target location, an offset boundary 1016 is determined based on the target boundary, or target location, of the lead shuttle. The offset boundary may have the acceleration and velocity values set to 0 with the location offset from the target boundary by the safe following distance. As such, if the lead shuttle stops at the target location, and the following shuttle stops at the offset boundary location, the shuttles will maintain the safe following distance. The target location 1004 of the lead shuttle 1002 may be considered a target boundary 1010 with the velocity and acceleration equal to zero. The offset boundary 1014 may be offset from the target boundary by a safe following distance between the shuttles. The offset boundary is then used along with region boundaries in determining the second shuttle's trajectory. The offset boundary will cause the second shuttle to stop at the offset boundary which will be a safe following distance from the first shuttle stopped at the target location 904. When the first, or lead, shuttle begins moving, the offset boundary can be removed.

While new offset boundaries can be created for a following shuttle, such as when a leading shuttle stops at a target location, or is otherwise caused to stop, other boundaries may be adjusted according to safe following distances. For example, when the lead shuttle enters a new region with new parameter values, the region's boundary for the following shuttle can be shifted according to the safe following distance. In this way, the same trajectory determination process can be used to maintain safe following distances between shuttles simply by shifting boundaries used by the shuttle in the trajectory planning.

When boundaries for a shuttle are modified or removed the trajectories for the shuttle can be recalculated. Determining the shuttle trajectories based on the determined braking region, braking start location and the region boundaries allows the shuttle trajectory to be quickly calculated and adjusted.

By calculating trajectories using shifted or offset boundaries it is possible to effectively calculate trajectories and manage shuttles on an individual basis, without the need to calculate for possible collision points between shuttles. The trajectories are calculated by first constructing a trajectory that is impossible to cause a collision because of the shifted boundary, and then by superimposing position compensations on the following shuttle to cross more distance faster based on the gap between a follower and its leader by having it obey 'real' region limits of the track, rather than any artificially imposed boundaries due to the shifted boundary. Further, when calculating a following shuttle's trajectory based on a shifted or offset boundary of a leading shuttle, it is possible to re-use at least a portion of the calculated trajectory of the leading shuttle, which can reduce the computation required to generate the trajectory for the following shuttle.

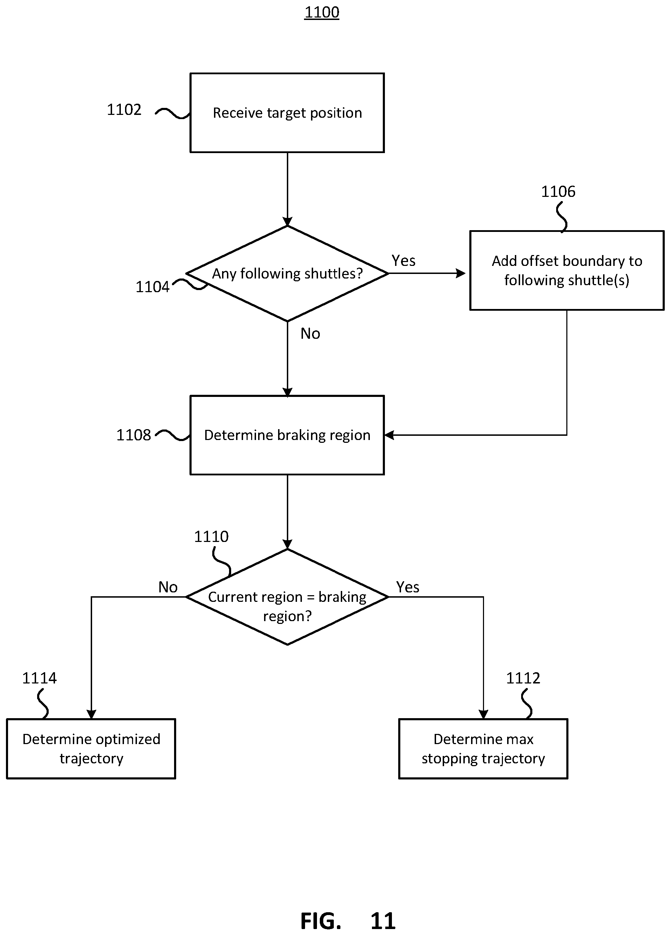

FIG. 11 depicts a method of controlling motion of two shuttles. The method is similar to the method 200 described above. The method begins with receiving a target location for a shuttle (1102). It is determined if there are any following shuttles (1104) and if there are (Yes at 1104), an offset boundary is created for the following shuttles (1106). The offset boundary is a boundary that has a velocity and acceleration of zero. The location of the offset boundary is based on the location of the target location but is offset towards the following shuttle by the safe following distance for shuttles so that when the lead shuttle stops at the target location the following shuttle stops at the location of the offset boundary. If there are multiple following shuttles each of the following shuttles may have their own respective offset boundary. Each subsequent following shuttle may be offset by a multiple of the safe following distance. Further, although described as determining if there is any following shuttles, one or more offset boundaries may be added without determining if there are any following shuttles.

Once the offset boundaries are added, the trajectories for the lead shuttle are determined in the same manner as described above. Namely, the braking region is determined (1108) and then the boundaries are used to calculate the shuttle trajectories. It is determined if the current region is the braking region (1110) and if it is (Yes at 1110) the maximum deceleration trajectory is determined (1112). The maximum deceleration trajectory can be determined as the region trajectory to the braking start location and then once the braking start location is reached the maximum deceleration is applied until stopped at the target location. If the current region is not the braking region (No at 1110), the region trajectory through the region while adhering to the boundary conditions is determined (1114). When the shuttle is a following shuttle, there will be an offset boundary that will be considered when determining the trajectory and so cause the following shuttle to stop at a safe distance.

As described above, boundaries can be created in order to adjust a following shuttle's trajectory based on the lead shuttle's trajectory. Additionally, or alternatively, the boundary conditions, including the location of the boundary, may be adjusted or removed. For example, a shuttle's maximum velocity and/or acceleration may be derated through a region and the region's boundary conditions may be adjusted while the derated shuttle is passing through the region so that any following shuttles will also pass through the region at the derated velocity or acceleration.

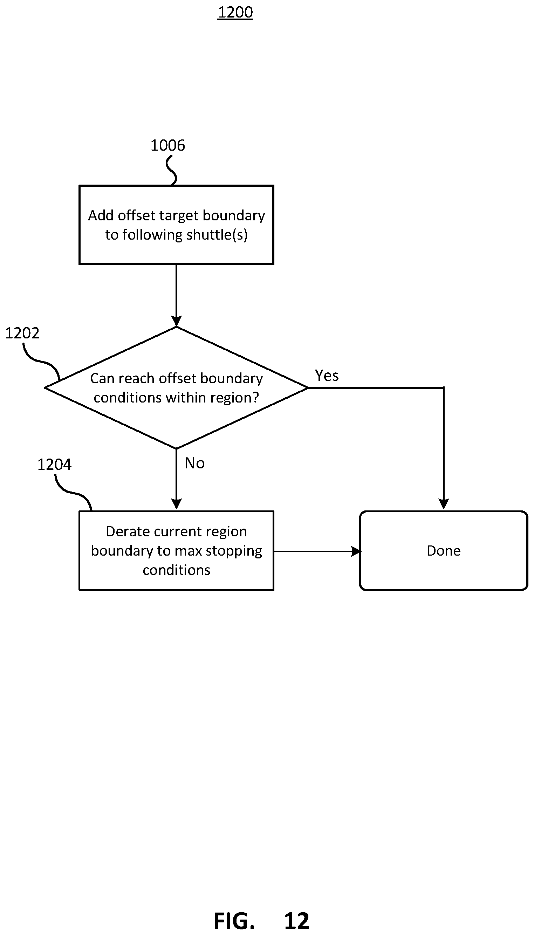

FIG. 12 depicts further details of adding an offset boundary to a following shuttle. When adding an offset boundary to a following shuttle, the new offset boundary may change the braking regions. For example, if the offset boundary is close to an existing region boundary, a shuttle entering the region may not be able to stop by the offset boundary location. In such a case the braking start location for the following shuttle can be re-calculated. Alternatively, as depicted in FIG. 12, the region's boundary limits can be adjusted. It is determined if the offset boundary conditions, for example acceleration and velocity of zero, can be reached within the region of the offset boundary. If the offset boundary conditions can be respected (Yes at 1202), no further adjustments are required as the shuttle trajectory will be determined to meet the boundary conditions, including the conditions of offset boundaries. If the offset boundary conditions cannot be reached within the region of the offset boundary (No at 1202), the boundary conditions of the region of the offset boundary can be derated (1204) so that a shuttle entering the region at the derated conditions can stop by the location of the offset boundary. With the changing boundary conditions, the following shuttle's trajectory may be recalculated.

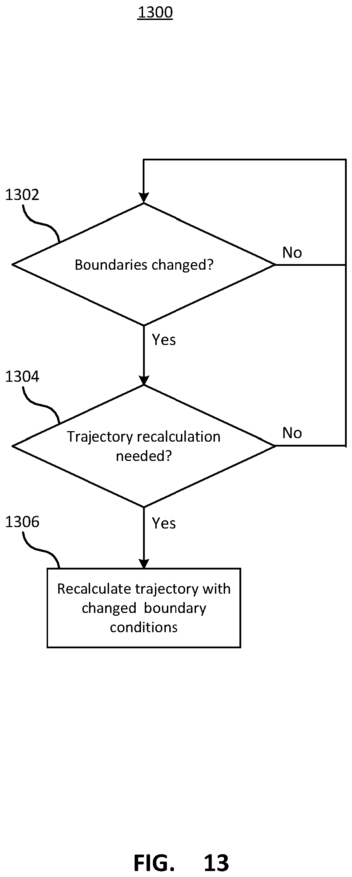

FIG. 13 depicts a method of recalculating a shuttle's trajectory. Events may occur that cause a shuttle's trajectory to need to be recalculated. For example, a guarding door may open which may cause one or more shuttles to stop, operating parameters may be changed such as changing a maximum velocity of a region, errors may occur, etc. The boundary-based trajectory planning can flexibly respond to such events. Since a shuttles trajectory is determined piecewise for each region as it passes through regions, some events may require a shuttle trajectory to be recalculated while others do not. When an event occurs it may result in boundaries for the shuttle being changed, which may include new boundaries being created for example based on a lead shuttle stopping, or existing boundaries being adjusted. Regardless it can be periodically checked if any boundaries have changed (1302). Rather than checking if boundaries have been changed, it may be possible to notify a trajectory planning process that boundary conditions have changed. Regardless, if the boundary conditions have changed (Yes at 1302), it is determined if the change requires the trajectory to be recalculated (1304). If the trajectory does not need to be recalculated (No at 1304) the process can return to wait for a boundary condition to change (1302). If the change in the boundary condition does require the trajectory to be recalculated (Yes at 1304) the trajectory can be recalculated as described above using the changed boundary conditions. The trajectory may not need to be recalculated in all scenarios. For example, if the changed boundary is not in the current region or the next region, and it doesn't change the braking start location, it may not be necessary to recalculate the trajectory, since the changed boundary would not have been used in calculating the trajectory. If the changed boundary conditions are associated with the next region, the trajectory may need to be recalculated since the shuttle's trajectory will need to match the changed conditions when entering the next region.

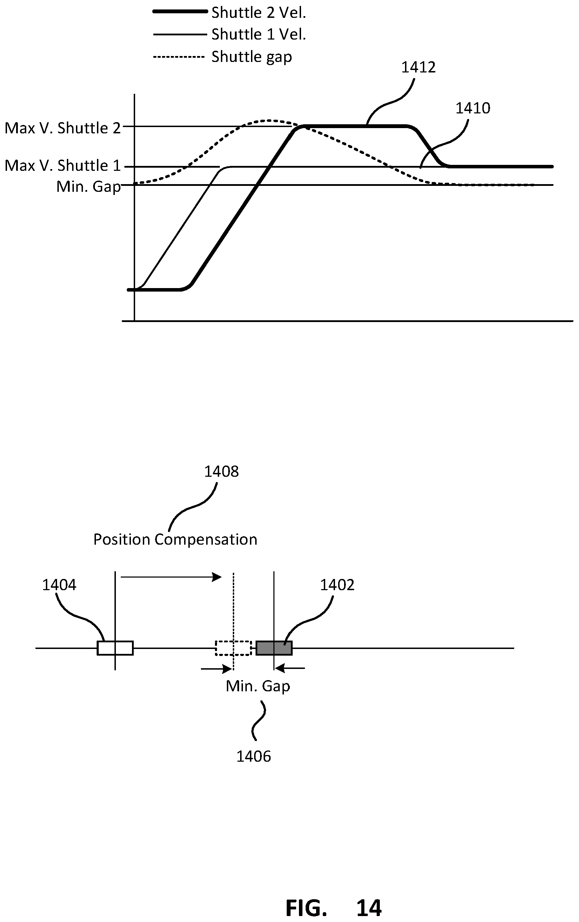

FIG. 14 depicts controlling a gap between shuttles. As described above, the trajectories of lead and following shuttles can be determined using boundary conditions in order to apply the lead shuttle's braking start location, or other movement conditions, to the following shuttle. Since both shuttles will accelerate to the same maximum velocity at the same maximum acceleration rate with the same constant jerk, they will not collide with each other. However, it also means that there may be unnecessarily large gaps between the shuttles. For example, if a lead shuttle begins accelerating before a following shuttle it may build a gap between the shuttles larger than the safe following distance. Since both shuttles will accelerate to the maximum velocity at the same rate, it is not possible to close the gap. However, in certain scenarios it may be possible to close or reduce the gap. For example, if the lead shuttle is travelling through a region at a derated velocity, such that the shuttle velocity is less than the normal maximum velocity of the region, it may be possible for a following shuttle to close the gap. Further, if the lead shuttle has stopped and begins accelerating before the following shuttle begins decelerating to stop, for example at an offset boundary, the following shuttle may not need to decelerate, or may start decelerating at a later time or location and may close the gap to the lead shuttle.

As depicted in FIG. 14, a lead shuttle 1402 may be moving on the track with a following shuttle 1404 following behind by some distance greater than the minimum safe following gap 1406. The following shuttle may apply a position compensation 1408 to its trajectory in order to close the following gap. As depicted by the graph in FIG. 14, the lead shuttle begins by accelerating to a maximum velocity 1410 that is derated from, or less than, the normal maximum velocity of the region. The following shuttle begins accelerating after the first shuttle and as such the gap between the two shuttles increases. Although the following shuttle will adhere to the derated maximum velocity of the lead shuttle for its primary trajectory, which may be specified in an adjusted boundary conditions imposed on the following shuttle from the lead shuttle, it can overlay a position compensation curve to accelerate up to the region's true maximum velocity 1412 in order to close the gap. The position compensation trajectory can be determined that will cause the following shuttle to close the gap to the lead shuttle and then applied to the determined trajectory for the following shuttle. The position compensation may be applied when the lead shuttle is travelling at a constant velocity below the region's maximum velocity. The position compensation may extend an acceleration time of the following shuttle, or may extend a time the following shuttle travels at a maximum velocity before decelerating.

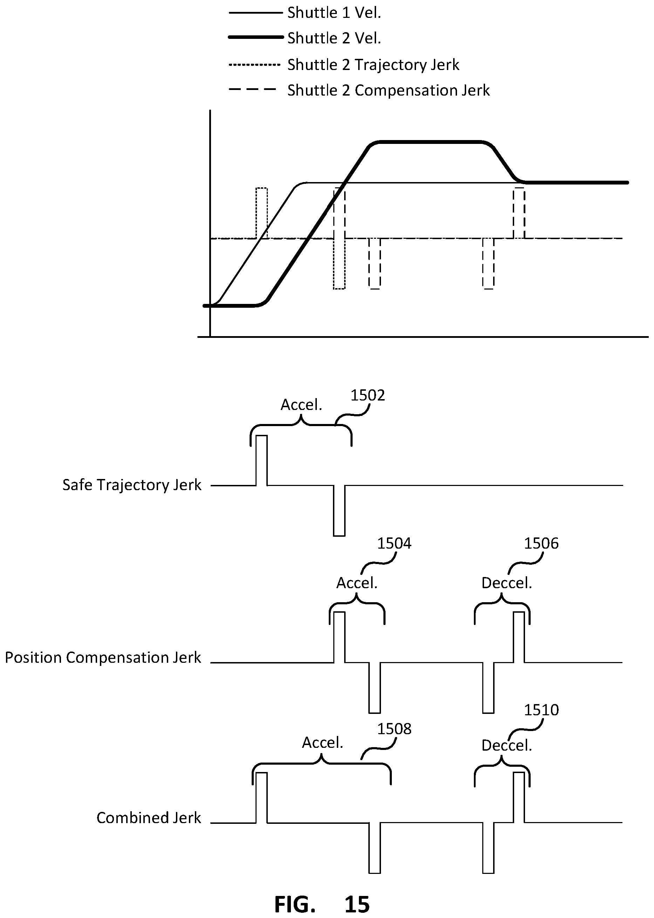

FIG. 15 depicts closing a gap between shuttles. FIG. 15 depicts a scenario that is the same as described with reference to FIG. 14, however also depicts jerk trajectories for the following shuttle. As described above, the acceleration of the following shuttle is adjusted to continue accelerating past the imposed velocity of the lead shuttle in order to close the gap. The overall combined trajectory may be determined based on a safe trajectory, which would accelerate the following shuttle to the maximum velocity imposed by the lead shuttle. This acceleration 1502 is associated with the safe jerk trajectory depicted. As described, the max velocity imposed onto the following shuttle from the lead shuttle is less than the max velocity of the region and as such the following shuttle can accelerate to a higher velocity to close the gap and then decelerate to the max velocity imposed by the lead shuttle. In order to close the gap, a position compensation trajectory can be determined and overlaid, or combined, with the safe trajectory. The jerk of the position compensation trajectory is depicted and comprises an acceleration portion 1504 which causes the shuttle to continue accelerating up to the maximum velocity of the region and a deceleration portion 1506 which causes the shuttle to decelerate to the lower velocity imposed by the lead shuttle.

Since the jerk values are constant, or approximately constant, they can be easily combined together. As depicted the combined jerk profile that results from combining the safe trajectory jerk and the position compensation jerk provides a jerk profile that has an extended acceleration portion 1508 compared to the safe trajectory jerk, followed by the deceleration portion 1510 in order to slow the shuttle back down to the velocity of the lead shuttle once the decreased gap is established. It is possible to combine jerk based trajectories in other ways.

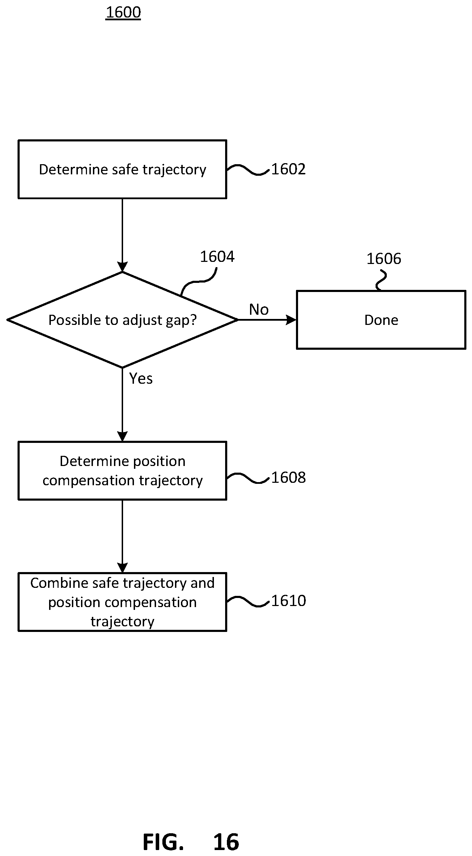

FIG. 16 depicts a method of controlling a gap between shuttles. The method 1600 begins with determining a safe trajectory for a following shuttle (1602). The safe trajectory is a trajectory that will avoid the shuttles colliding, however it may result in a larger following gap than necessary. It is determined if it is possible to close the gap to the lead shuttle (1604). It may be possible to close the gap if the lead shuttle is travelling at a velocity less than the maximum velocity for the region, or if the lead shuttle begins decelerating before the leading shuttle needs to decelerate for example as a result of entering a new region with a lower max velocity. Further, if the lead shuttle begins accelerating so that the following shuttle no longer needs to stop, it may be possible to close the gap by starting to decelerate at a later time or location. If it is not possible to close the gap (No at 1604) the position compensation determination is done (1606). If it is possible to close the gap (Yes at 1604), the position compensation trajectory is determined (1608). The position compensation trajectory may then be applied to the determined safe trajectory (1610). The trajectories are determined using constant jerk values which can simplify the calculations for combining the trajectories together. With constant jerk, the acceleration can be extended at a point where the jerk for the safe trajectory changes. For example, the position compensation trajectory can be combined with the safe trajectory when the jerk of the safe trajectory changes from a positive constant value to zero or a negative constant value. This will result in the jerk still being a constant value, either at the positive constant value or zero. A positive constant jerk value means that the shuttle is continuing to accelerate to the maximum acceleration value. A jerk value of zero means that the acceleration value is constant, either accelerating or decelerating at the maximum value or not accelerating at all.

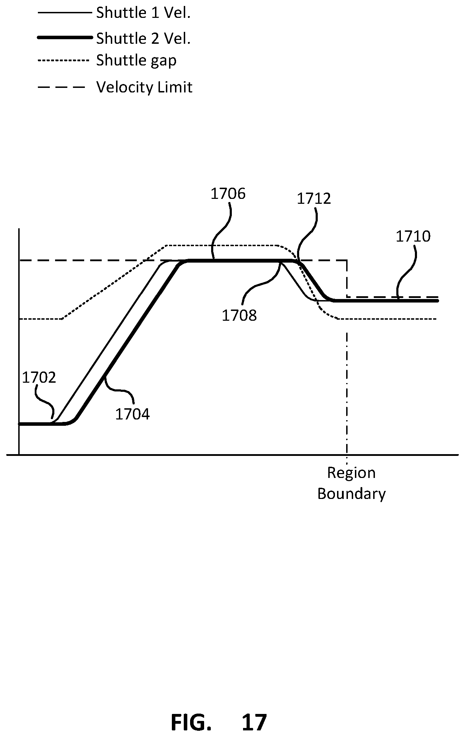

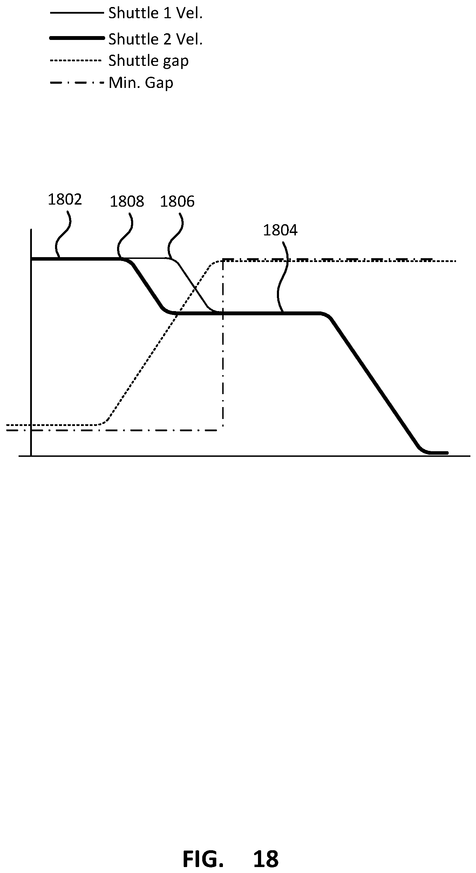

FIGs. 17 and 18 depict further examples of controlling a gap between shuttles. FIG. 17 depicts a scenario in which a lead shuttle begins accelerating 1702 and a following shuttle begins accelerating 1704 some time after the lead shuttle. Both shuttles continue accelerating up to the maximum velocity. Since the lead shuttle began accelerating before the following shuttle, the gap between the two shuttles will continue to increase until the shuttles reach the max velocity 1706. Since both shuttles are travelling at the max velocity the gap between the shuttles cannot be decreased. At some point, the lead shuttle begins to decelerate 1708, for example in order to reduce the velocity to the max velocity 1710 of a next region, stop at a target location, or some other reason. Rather than decelerating at the same time as the lead shuttle, which would maintain the gap, the following shuttle can continue travelling at the maximum velocity for a period of time that will close the gap to the minimum safe shuttle gap and then begin decelerating 1712 to the velocity imposed either by the region or the lead shuttle. The following shuttle may determine a safe trajectory that would maintain the same gap between the shuttles and then determine a position compensation trajectory that closes the gap between the shuttles and can be overlaid on the safe trajectory. The combined trajectory of the safe trajectory and position compensation trajectory may be combined together for the overall shuttle's trajectory. This generates an efficient and fully region trajectory without complicated/excessive operations to figure out how long the shuttle can remain at the max velocity for.

.FIG. 18 depicts a further scenario in which the safe following distance between shuttles changes. A first shuttle and a second shuttle are travelling at max velocity 1802 for a region, with a shuttle gap equal to the minimum safe gap. The next region has an increased minimum safe gap and decreased maximum velocity. The lead shuttle begins decelerating 1804 in order to meet the max velocity 1806 of the next region. In order to meet the increased safe following limit of the next region, the following shuttle begins decelerating 1808 at a time or location before the first shuttle in order increase the gap between the shuttles. The gap between the shuttles will reach the minimum safe gap before crossing the boundary to the next region and then the trajectories of the shuttles may match each other, for example if the lead shuttle is stopping, in order to maintain the safe following distance established between the shuttles.

As described above, in addition to optimizing for maximum speed, the trajectory planning system can be configured to account for other factors, such as power consumption. In some scenarios, maximizing throughput by constantly closing gaps between shuttles can lead to frequent accelerations and decelerations. While this may increase throughput in certain situations, the benefit might be negligible in others, while leading to significantly higher power consumption. The system architecture, which decouples the base trajectory from superimposed position compensations, provides the flexibility to choose the optimization strategy.

The system can include functionality for use in determining when to execute gap-closing position compensations. A user-configurable setting may allow for selecting a preferred motion profile, such as 'maximize throughput' or 'smooth/low power consumption'. In a 'smooth/low power consumption' mode, the system can scale down or selectively apply position compensations to reduce the number and magnitude of accelerations. This provides a trade-off between system throughput and energy efficiency, selectable by the user based on operational needs.

To further optimize for efficiency, the system can be configured to automatically avoid performing a position compensation if it determines that an approaching region or boundary will require an increase in the shuttle's safe following distance. In such cases, closing a gap only to widen it again shortly thereafter would be inefficient. The system can predict this and forego the initial gap-closing maneuver, resulting in smoother motion and lower power usage.

Another optional configuration, aimed at reducing power consumption, involves modifying shuttle behavior when entering a braking region. If a user selects a power-saving mode, the system may avoid accelerating to the maximum velocity upon entering a new region with a higher velocity limit, especially if that region is also the braking region. This can be accomplished without changing the core trajectory planning logic. The system can impose new, 'artificial' boundary limits on the newly entered region based on the shuttle's current constant velocity. This new boundary condition would then cascade to all following shuttles, maintaining safe and coordinated movement while prioritizing lower power consumption over a marginal increase in throughput.

The flexibility to apply and impose boundaries with different kinematic limits, combined with intelligent control over when to execute position compensations, allows for the creation of customized trajectory generation modes. The system can be tailored to prioritize various factors such as the highest velocity, the least number of accelerations and lower overall acceleration to save power, rather than exclusively aiming to perform every action as fast as possible. Various combinations of factors can be used in optimizing the shuttle's trajectory.

The above has described how to determine shuttle trajectories in an efficient and simple manner. The process can simplify the calculations required for determining the trajectories, which in turn can allow for increased performance, whether computing trajectories less frequently, calculating trajectories for more shuttles, accounting for additional factors or parameters when calculating trajectories, optimizing throughput and/or using lower powered and so lower cost, computing hardware. Further, the process, including the position compensation, allows for optimized following distances between shuttles.

The boundary-based, piecewise trajectory planning described herein provides concrete technical improvements over prior approaches. By determining shuttle trajectories region-by-region as shuttles enter each region, rather than pre-computing entire trajectories, the computational load on the conveyor controller can be reduced, enabling real-time trajectory determination for a larger number of shuttles using lower-cost processing hardware. Further, by using offset boundaries to coordinate multiple shuttles, the system can eliminate or reduce the need for computationally expensive collision-detection calculations at each controller cycle, directly improving the throughput and responsiveness of the physical conveyor system

It will be appreciated by one of ordinary skill in the art that the system and components shown in FIGs. 1 - 18 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.

## Claims

1. A method of controlling a linear motor conveyor system comprising at least one shuttle moving along a track, the method comprising:
receiving a target location on the track to stop a shuttle, the track associated with two or more regions each associated with a respective maximum velocity and a maximum acceleration;
determining shuttle trajectories for each region the shuttle moves through from a current location to the target location, by determining if a current region is a braking region in which the shuttle must begin decelerating in order to stop at the target location, and:
when the current region is not the braking region, determining an region trajectory of the shuttle within the region based on the maximum acceleration and maximum velocity of the region, and the maximum velocity and maximum acceleration of the next region on the track; and
when the current region is the braking region, determining an region trajectory of the shuttle to a deceleration location within the braking region and a maximum deceleration trajectory of the shuttle from the deceleration location to the target location; and
controlling the shuttle to move along the track according to the determined shuttle trajectories.

2. The method of claim 1, wherein each region of the two or more regions are defined by respective boundaries each associated with:
a location along the track of a start of the respective region;
a maximum velocity of shuttles travelling in the respective region; and
a maximum acceleration of shuttles travelling in the respective region.

3. The method of claim 2, wherein the region trajectory of the shuttle within the current region is determined to match the velocity and acceleration associated with the boundary of the next region while adhering to the velocity and acceleration associated with the boundary of the current region.

4. The method of claim 3, further comprising determining if a second shuttle (the following shuttle) is following the shuttle (the lead shuttle), and when there is a following shuttle following the lead shuttle, adding an offset boundary for the following shuttle that is offset by a minimum safe following distance from the target location of the lead shuttle.

5. The method of claim 4, further comprising determining shuttle trajectories for the following shuttle.

6. The method of claim 5, wherein determining the shuttle trajectories for the following shuttle is based on the offset boundary to ensure the following shuttle does not collide with the lead shuttle.

7. The method of any one of claims 4 to 6, further comprising, determining shuttle trajectories for the following shuttle by:
determining a safe trajectory for the following shuttle;
determining a position compensation trajectory for closing a gap between the following shuttle and the lead shuttle; and
combining the safe trajectory with the position compensation trajectory.

8. The method of claim 7, wherein the boundaries are further associated with:
a minimum safe following distance between shuttles travelling in the respective region

9. The method of claim 7 or 8, further comprising determining if it is possible to close the gap and determining the position compensation trajectory when it is possible to close the gap.

10. The method of any one of claims 2 to 9, further comprising one or more of:
adjusting one or more existing boundaries;
adding one or more new boundaries; and
removing one or more existing boundaries.

11. The method of any one of claims 1 to 10, further comprising determining the braking region for the shuttle.

12. The method of claim 11, where in the braking region is the region of the two or more regions that the shuttle must begin decelerating in order to stop at the target location while adhering to the respective maximum velocity and the respective maximum acceleration of each of the one or more regions the shuttle will move through.

13. The method of claim 11 or 12, wherein determining the braking region comprises virtually backtracking along the track from the target location according to the regions' maximum accelerations and maximum velocities until a maximum velocity is reached and setting the region the maximum velocity is reached in as the braking region.

14. A controller for controlling shuttles on a track of a linear motor conveyor, the controller comprising:
a memory storing instructions; and
a processor for executing the instructions stored in memory, which when executed configure the controller to perform a method according to any one of claims 1 to 13.

15. A non-transitory computer readable medium storing instructions which when executed by a processor a controller configure the controller to perform a method according to any one of claims 1 to 13.
